# EUROPEAN PATENT SPECIFICATION

(11) **EP 2 101 978 B1**
(45) Date of publication and mention of the grant of the patent: **31.10.2018**
(21) Application number: 07855610.7
(22) Date of filing: 21.12.2007
(51) Int. Cl.: B29C 45/30, B29C 45/20, B29C 45/76

(54) **INJECTION MOLDING APPARATUS**
SPRITZGIESSVORRICHTUNG
APPAREIL DE MOULAGE PAR INJECTION

(30) Priority: 21.12.2006 US 871193 P
(43) Date of publication of application: 23.09.2009
(73) Proprietor: Mold-Masters (2007) Limited, Georgetown ON L7G 4X5 (CA)
(72) Inventor: FAIRY, Fabrice, 77630 Barbizon (FR); KUDCHADKAR, Vijay, Toronto, ON M5J 2Y7 (CA)
(74) Representative: Grünecker Patent- und Rechtsanwälte PartG mbB
(86) International application number: PCT/CA2007/002328
(87) International publication number: WO 2008/074148

(56) References cited:
- EP-A1- 0 603 120
- EP-A2- 1 731 288
- CA-A1- 2 369 692
- CA-A1- 2 385 016
- CA-A1- 2 457 643
- US-A1- 2004 161 490
- US-A1- 2005 255 187

## Description

### FIELD OF THE INVENTION

This invention relates generally to an injection molding apparatus, and more particularly to a hot-runner injection molding apparatus.

### BACKGROUND OF THE INVENTION

Control of melt pressures and flow rates is important to molded part quality and consistency.

Document US 2004/161,490 A1 describes an injection molding system having a valve gated hot runner nozzle with a flow control pin disposed in a nozzle melt channel, wherein the flow control pin extends from an actuating mechanism provided upstream of a manifold through a seal member and an outlet portion of a manifold melt channel to the nozzle melt channel.

Document US 2005/255,187 A1 shows a self regulating valve connected to an actuating mechanism and positioned in the bend of a melt channel to regulate the melt pressure through the melt flow channel, wherein a control member having a head portion with an angular aperture provided in fluid communication with a first portion of the manifold melt channel and a top surfacewhich is in direct fluid communication with a downstream portion of the manifold melt channel.

Document EP 1 731 288 A2 describes an injection molding apparatus comprising a manifold to direct material into a mold cavity; a valve pin adapted to reciprocate through the manifold toward and away from the mold cavity, wherein valve pin contacts material injected into the mold cavity; and a controller to control a flow rate of material injected into the first cavity during an injection cycle based on a force exerted on the valve pin by the material.

### SUMMARY

An injection molding apparatus according to the invention is defined in independent claim 1 with preferred embodiments defined in dependent claims 2 to 9.

### BRIEF DESCRIPTION OF THE FIGURES

Embodiments of the present invention will now be described more fully with reference to the accompanying drawings in which:
Fig. 1 is a sectional view of an injection molding apparatus according to the invention;
Fig. 2 is a sectional view of mainly a nozzle of Fig. 1;
Figs. 3a-b are sectional views of the valve of Fig. 1; and
Fig. 4 is a block diagram of a system for controlling the valve of Fig. 1.

### DETAILED DESCRIPTION OF THE INVENTION

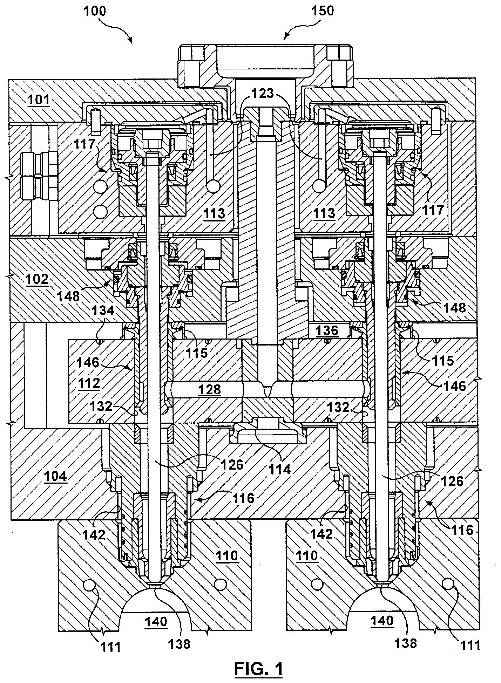

Fig. 1 shows a sectional view of an injection molding apparatus 100. The injection molding apparatus 100 comprises a backing plate 101, mold plates 102, 104, cavity inserts 110, an actuator plate 113, and a manifold 112. The backing plate 101, mold plates 102, 104, and cavity inserts 110 are stacked. The cavity inserts 110 can have cooling channels 111 for circulating cooling fluid. The actuator plate 113 is surrounded by the mold plate 102 and the backing plate 101. The manifold 112 is located on the mold plate 104 by a locating ring 114 and separated from the mold plate 102 by valve discs 115. The injection molding apparatus 100 further comprises a pair of nozzles 116 disposed within the mold plate 104 and cavity inserts 110. Each nozzle 116 is adapted to receive a pin 126 (not hatched in the figures). Disposed in the actuator plate 113 are two actuators 117, each for actuating the pin 126 of the respective nozzle 116. The actuator plate 113 comprises at least a fluid channel 123 for feeding the attached actuators 117. Coupled to the valve discs 115 and disposed within the manifold 112 are valves 146, which are controlled by actuators 148 that are disposed within the mold plate 102.

In the injection molding apparatus 100, two nozzles 116 and two sets of related components merely serve as an example, and more or fewer nozzles and sets of related components could readily be used without altering the principles of the invention. Moreover, the backing plate 101, mold plates 102, 104, and cavity inserts 110 are shown as an example. More or fewer plates could be used, depending on specific applications. The number of plates, kinds of plates, and the materials of which the plates are made are not central to the invention.

In the following, the direction of molding material flow from the manifold 112 to the cavity inserts 110 is known as downstream, while the opposite direction is known as upstream. Forward means the direction from the backing plate 101 to the cavity inserts 110 and rearward means the opposite direction. However, the orientation, geometry, and structure of the injection molding apparatus 100 are not limited by these terms.

Disposed among the mold plates 102, 104 is the manifold 112, which comprises a manifold melt channel 128 and guide bores 132 in which are disposed the valves 146. The manifold melt channel 128 is fed by a sprue 150 connected to a molding machine (not shown) or other molding material source. The length, diameter or width, and general geometry of the manifold melt channel 128 depend on the specific application and the amount and nature of the molding material. In this embodiment, the manifold melt channel 128 is a cylindrical bore. It is known to make manifolds out of a single plate, a group of plates (with different melt channels in different plates), piping or tubing, and modular bars, and the manifold 112 could equally be any of these kinds of manifolds. For example, in another embodiment the manifold 112 can comprise two separate plates. In addition, the manifold 112 is provided with a heater 134. Generally, when used as part of a hot-runner application, the manifold 112 is heated and separated from the surrounding mold plates by an insulating air space 136.

In this embodiment, the nozzles 116 feed mold cavities 140 of the cavity inserts 110 through mold gates 138. In the cavities 140 molding material is solidified to form an injection molded product (not shown). In other embodiments, mold inserts or gate inserts can be provided in the mold plate 104 or in the cavity inserts 110.

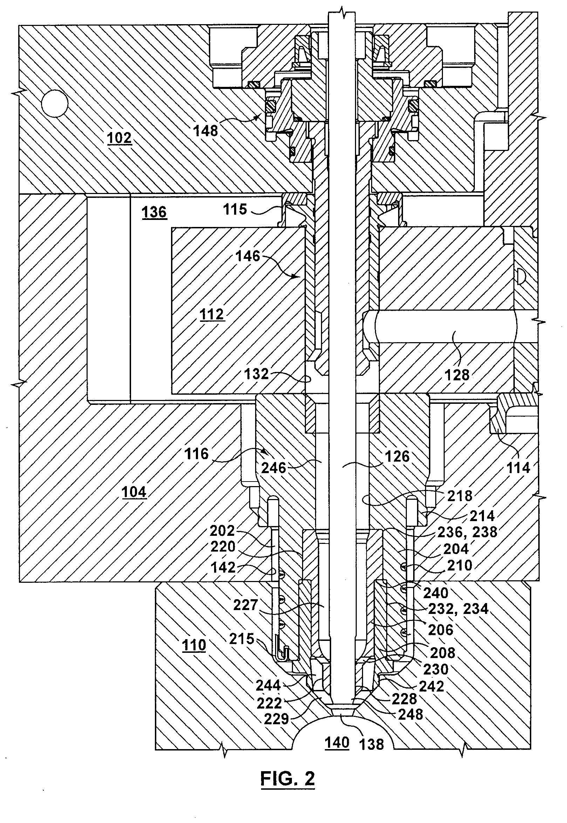

As shown in the sectional view of Fig. 2, coupled to the manifold 112 are the nozzles 116, each of which is disposed in a well 142 formed in the mold plate 104 and respective cavity insert 110. The well 142 is larger than the nozzle 116 such that an insulating air space 202 is created around the nozzle 116, so that heat in the nozzle 116 is not readily lost to the mold plate 104 or cavity insert 110. The nozzle 116 comprises a nozzle body 204, a nozzle tip 206, and a tip retaining piece 208 that connects the nozzle tip 206 to the nozzle body 204. The nozzle 116 further comprises a spirally wound heater 210 (e.g., an electric heater, partially shown) having varying pitch and embedded in the nozzle body 204 from the head to the area of the nozzle tip 206. A nozzle flange 214 is provided at the head of the nozzle body 204 and serves to support the nozzle 116 in the mold plate 104. To measure the temperature of the nozzle 116 or molding material therein, a thermocouple 215 may be situated inside a thermocouple well.

The nozzle body 204 is generally cylindrical and comprises a longitudinal bore 218, which is also generally cylindrical. The longitudinal bore 218 of the nozzle 116 is aligned with the guide bore 132 of the manifold 112.

The nozzle tip 206 is disposed in a frontal bore 220 of the nozzle body 204 and comprises an alignment portion 222. The nozzle tip 206 can be made of a single piece or multiple pieces. The nozzle tip 206 has a nozzle tip melt channel 227 in communication with the longitudinal bore 218 of the nozzle body 204. The nozzle tip 206 is set back from the cavity insert 110 such that a forward melt area 229 exists.

In this embodiment, the alignment portion 222 has an alignment bore 228. The nozzle tip 206 further comprises a plurality of release melt channels 230 disposed upstream of the alignment portion 222, with one release melt channel 230 being the minimum number required and the maximum simply limited by geometry, molding material, and the desired structural integrity of the nozzle tip 206. Each release melt channel 230 can be said to be lateral in that it allows molding material to flow sideways relative to the general flow of molding material in the nozzle tip 206. Each release melt channel 230 need not be precisely lateral and can be at an angle instead. Each release melt channel 230 can be a bore, a slit, a hole, an opening, or any other type of channel structure. The plurality of release melt channels 230 may be of different sizes or shapes or of the same size or shape.

The tip retaining piece 208 has threads 232 that are mated into corresponding threads 234 of the nozzle body 204, and in this way retains the nozzle tip 206 in the nozzle body 204. The retaining is assisted by a concave shoulder 236 in the nozzle body 204 and a corresponding convex shoulder 238 on the nozzle tip 206 and by the shape of the contact area 240 between the corresponding surfaces of the nozzle tip 206 and the tip retaining piece 208. Other coupling schemes, such as brazing, could also be used. The tip retaining piece 208 further comprises a sealing portion 242 that fits or seals against the cavity insert 110 and prevents molding material from entering the insulating air space 202.

An annular melt channel 244 exists between the tip retaining piece 208 and the alignment portion 222 of the nozzle tip 206, the annular melt channel 244 circumferentially surrounding a portion of the nozzle tip 206 that is downstream of the release melt channels 230. The one or more release melt channels 230 provide molding material communication between the nozzle tip melt channel 227 and the annular melt channel 244. The annular melt channel 244 communicates molding material from the release melt channels 230 to the forward melt area 229, which can communicate with the mold gate 138.

Running through the manifold 112 and the nozzle 116 is the pin 126. The pin 126 is sometimes called a valve pin or a needle.

The pin 126 is disposed within the valve 146, the longitudinal bore 218 of the nozzle body 204, and the nozzle tip melt channel 227 of the nozzle tip 206. The pin 126 is narrower than the guide bore 132, the longitudinal bore 218, and the nozzle tip melt channel 227, thus defining a central melt channel 246 between the pin 126 and the nozzle body 204 as well as between the pin 126 and the manifold 112 and nozzle tip 206. The pin 126 can have stepped diameters, such that the pin 126 is narrower at the nozzle tip 206 than at the actuator 117. The central melt channel 246 communicates with the manifold melt channel 128 via an outlet of the manifold melt channel 128. In this embodiment, the central melt channel 246 has an annular cross-section. The pin 126 has a tip portion 248. In this embodiment the tip portion 248 has a narrowed or pointed end. The pin 126 is slidably disposed in the valve 146 in the guide bore 132, and the pin 126 can slide or reciprocate to open and close melt communication of the central melt channel 246 to the mold gate 138 with the tip portion 248. As such, the pin 126 can be said to have opened and closed positions. The position of the pin 126 is controlled by the actuator 117.

The alignment portion 222, and more specifically in this embodiment, the alignment bore 228 of the nozzle tip 206 aligns or guides the pin 126 over the sliding range of movement of the pin 126 to prevent lateral deflection of the pin 126 during sliding. This aligning or guiding function of the alignment portion 222 (alignment bore 228) can reduce wear of the mold gate 138 caused by the pin 126 and can further improve injection technique. The alignment bore 228 can also prevent resistance against movement of the pin 126. Additionally, an inside surface of the alignment bore 228 can be coated with a coating that aids in the movement (a friction-reducing coating), reduces wear to the alignment bore 228 (a wear-resistant coating), and/or improves alignment of the pin 126 with respect to the mold gate 138. The coating can be, but is not limited to, a nickel-based material. The coating can also be implemented to improve the hardness of the alignment portion 222 surface in contact with the pin 126. In addition, the fit between pin 126 and alignment bore 228 is configured to prevent molding material from flowing between the pin 126 and the alignment bore 228.

In addition, as controlled by the position of the pin 126, the nozzle tip 206 distributes molding material from the central melt channel 246 through release melt channels 230 and to the annular melt channel 244, such that the flow, velocity, and/or pressure of the molding material are balanced. This can result in an even and balanced flow of the molding material.

In Figs. 1 and 2, the pin 126 is illustrated in the opened position. In operation, the pin 126 is moved between its opened and closed positions by way of the actuator 117 to control melt flow into the cavity 140. Any number of opening and closing sequences can be used.

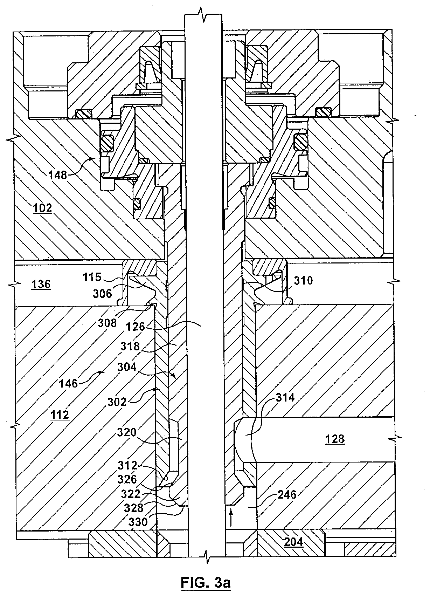

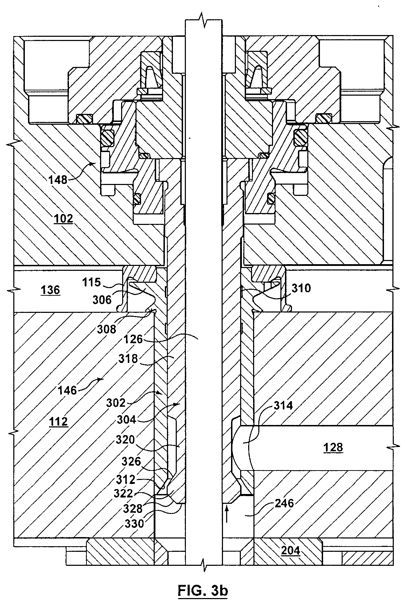

The valve 146 (which may also be called a valve) can best be seen in Figs 3a-b. The valve 146 comprises a support extension 302 and a hollow control rod 304 (or "valve member"). The valve disc 115 may also be considered part of the valve 146; and in fact, the valve disc 115 and support extension 302 can be made of a unitary piece. The valve disc 115 could also be replaced by one or more independent spacers. In Fig. 3a, the hollow control rod 304 is shown in an open position. In Fig. 3b, the hollow control 304 rod is shown in a closed position.

The support extension 302 is a hollow, generally tubular piece that is fixed in place and extends from the air space 136 to the forward part of the manifold 112. At the rearward end of the support extension 302, a flange 306 can be provided to mate with the valve disc 115, another flange 308 can be provided to seal against the manifold 112, and at least a groove 310 can be provided to trap melt to seal against the control rod 304. A beveled surface 312 is provided at the forward end of the support extension 302. The beveled surface 310 can be flat, curved, or irregularly shaped, and preferably tapers inward as it extends towards the rearward section of the manifold 112. The support extension 302 further comprises a melt opening 314 aligned with the outlet the manifold melt channel 128. The melt opening 314 allows melt from the manifold melt channel 128 to reach the central melt channel 246.

The hollow control rod 304 is a generally tubular piece that is slidably disposed within the support extension 302 and extends from the actuator 148 to the forward part of the manifold 112. The hollow control rod 304 is hollow in order to accommodate the pin 126, which extends through it and rearward through the actuator 148 as well. The hollow control rod 304 comprises a full section 318, a narrowed section 320, and an enlarged valve portion 322. The full section 318 is made with an outer diameter to slidably mate with the support extension 302. The narrowed section 320 is located between the full section 318 and the enlarged valve portion 322 and of an outer diameter narrower than diameters of the full section 318 and the enlarged valve portion 322. The narrowed section 320 allows melt from the manifold melt channel 128 to reach the central melt channel 246. The inner diameters of the full section 318, the narrowed section 320, and the enlarged valve portion 322 are substantially the same and accommodate the slidable pin 126 therein.

The enlarged valve portion 322 is located near the beveled surface 312 of the support extension 302, and can have the same or different outer diameter as the full section 318. The enlarged valve portion 322 comprises a rearward surface 326, a first forward surface 328, and a second forward surface 330. The rearward surface 326 is near the beveled surface 312 of the support extension 302. When the position of the enlarged valve portion 322 changes, the volume of the annular melt path between the rearward surface 326 and the beveled surface 312 changes. In this way, the position of the hollow control rod 304 within the support extension 302 can control the flow of melt from the manifold melt channel 128 into the central melt channel 246, and ultimately into the cavity 140. The overall shape of the enlarged valve portion 322 can be different from that described and need not even be axially symmetric, but the enlarged valve portion 322 should generally be of larger outer diameter than the narrowed section 320. The shapes of the enlarged valve portion 322 and the support extension 302 as a whole are not critical, but should be selected in an effort to reduce shear forces exerted by the flowing melt.

The rearward surface 326 can be flat, curved, or irregularly shaped, and preferably tapers inward as it extends towards the rearward section of the manifold 112. The first forward surface 328 and the second forward surface 330 can also be flat, curved, or irregularly shaped. The first forward surface 328 and the second forward surface 330 can also be the same surface.

The actuator 148 is a hydraulic, pneumatic, or electric actuator that can exert a control force on the hollow control rod 304. The actuator 148 is configured to apply a forward force to the hollow control rod 304, thereby tending to push the hollow control rod 304 in the direction of melt flow (forward). This action tends to enlarge the annular melt path between the rearward surface 326 and the beveled surface 312.

The melt in the manifold melt channel 128 and in the central melt channel 246 exerts a pressure force on the hollow control rod 304 as well. The net effect of the pressure force is to tend to push the hollow control rod 304 in a direction opposite melt flow (rearward, as shown by the arrow). The first and second forward surfaces 328, 330 can be viewed as receiving the net pressure force (with pressures on other surfaces cancelling each other). This action tends to constrict the annular melt path between the rearward surface 326 and the beveled surface 312. When shapes of the enlarged valve portion 322 and the support extension 302 as a whole are well designed, shear forces exerted by the flowing melt, which tend to act opposite the pressure force, become negligible or insignificant.

When the forward control force from the actuator 148 exceeds the rearward pressure force from the melt, the hollow control rod 304 will move forward, thereby enlarging the annular melt path between the rearward surface 326 and the beveled surface 312, and thus increasing the flow of melt into the central melt channel 246 and consequently increasing the rearward pressure force. The hollow control rod 304 will move forward until the forward control force is balanced by the increasing rearward pressure force or until the physical limit of the movement is reached.

Likewise, when the rearward pressure force from the melt exceeds the forward control force from the actuator 148, the hollow control rod 304 will move rearward, thereby constricting the annular melt path between the rearward surface 326 and the beveled surface 312, and thus decreasing the flow of melt into the central melt channel 246 and consequently decreasing the rearward pressure force. The hollow control rod 304 will move rearward until the decreasing rearward pressure force is balanced by the forward control force or until the physical limit of the movement is reached.

Any difference between the rearward pressure force from the melt and the forward control force from the actuator 148 causes the hollow control rod 304 to move until the rearward pressure force and forward control force reach equilibrium, resulting in regulation of the melt pressure in the central melt channel 246. In this way, the actuator 148 governs downstream melt pressure. When the actuator 148 is a hydraulic or pneumatic actuator, there is a direct relationship between the source pressure for the actuator 148 and the melt pressure downstream of the hollow control rod 304. If the actuator 148 is an electric actuator, there may be a direct relationship between actuator power and the melt pressure downstream of the hollow control rod 304.

The valve 146 reduces if not nearly eliminates the effects of fluctuating melt pressure in the manifold melt channel 128, as long as the melt pressure in the manifold melt channel 128 is suitably high (i.e., at least equal to the maximum desired cavity pressure). In an apparatus with more than one nozzle, a valve and associated actuator can be provided to each nozzle so that the pressure and melt flow through each nozzle can be independently controlled, despite the fact that the melt source (i.e., injection molding machine) may be common to many or all of the nozzles. The valve 146 being independent from the pin 126 means that any forces acting on the pin 126 do not significantly affect operation of the valve 146, e.g., movement of the hollow control rod 304 is not significantly affected by melt shear forces on the pin 126 and vice versa.

The physical limits of the movement of the hollow control rod 304 can be seen in Figs. 3a-b; however, these limits are not critical. The hollow control rod 304 can be made to open melt flow more than shown in Fig. 3a, and can also be made to close melt flow more than shown in Fig. 3b, even to the point of completely closing off melt flow.

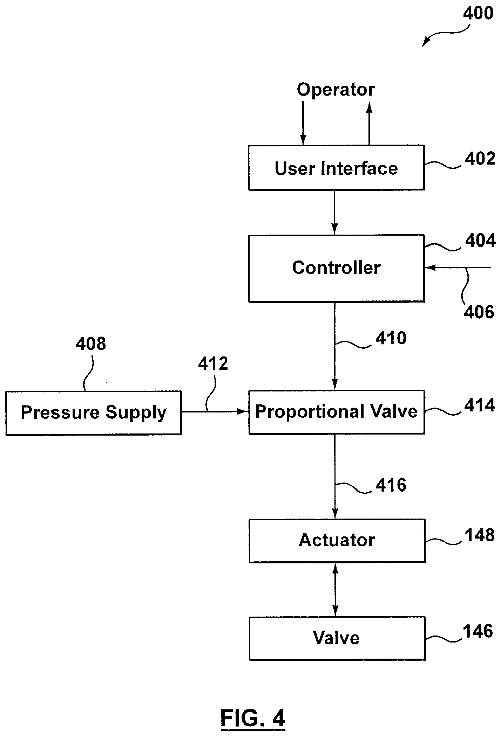

Fig. 4 shows a block diagram of a system 400 for controlling the valve described above. The system 400 includes a user interface 402, a controller 404, a pressure supply 408, a proportional valve 414, an actuator 148, and a valve 146. More that one set of a proportional valve 414, an actuator 148, and a valve 146 can be used, and these sets can all be connected to the same controller 404 and pressure supply 408. Each set can be used for each nozzle of a hot-runner of an injection molding apparatus.

The user interface 402 can be any input/output device that allows communication of data between an operator and controller 404. The user interface 402 can include a keyboard, display, a touch screen, a voice activated device, retinal following device, a virtual keyboard, or similar device.

The controller 404 can include a processor, a microprocessor, a computer system, or the like, that is coupled to underlying software and external devices in order to receive, store, process, generate, and/or transmit data.

In operation, at a start of a molding cycle, the controller 404 receives a signal 406 from a molding machine (not shown), indicating the molding cycle has started. Upon receipt of the signal 406, the controller 404 generates a control signal 410 to the proportional valve 414. For example, the signal 410 can include information relating to a pressure profile for a current molding cycle for that proportional valve 414 receiving the signal 410. In one example, the pressure profile is a range of different electronic voltage magnitudes, which correlate to pressures. The pressure profile can be downloaded, stored, and/or received at controller 404 via an internal (intranet) or external (Internet) wired or wireless network. Thus, when multiple nozzles are used, each having a proportional valve 414, an actuator 148, and a valve 146, a corresponding plurality of signals 410 can be generated, individualized for each nozzle, and the melt pressure and flow for each nozzle can be independently regulated, which is particularly advantageous for systems with many cavities or systems with different shaped cavities.

The proportional valve 414 uses the signal 410 to generate an actuator pressure 416 from the pressure supply 408. The proportional valve 414 may be linear such that an increase in the signal 410 corresponds directly to an increase in the actuator pressure 416.

The actuator 148 converts the actuator pressure 416 to the above-described control force that is applied to the valve 146. Since the control force is balanced by melt pressure, the pressure of the melt in the central melt channel 246 (see Fig. 3) is proportional to the output of the proportional valve 414. Thus, melt pressure in a nozzle (e.g., nozzle 116) is proportional to the electrical signal 410 provided by the controller 404. In this way, the operator can independently regulate the pressure of the melt for each nozzle in a hot-runner of an injection molding apparatus.

## Claims

1. An injection molding apparatus (100) comprising:
a manifold (112) having a manifold melt channel (128) with an outlet for guiding and delivering a molten material, and a guide bore (132);
a hot runner nozzle (116) located between the manifold (112) and a mold gate (138), wherein the nozzle (116) has a central melt channel (246) communicating with the manifold melt channel (128) to receive the molten material;
a pin (126) movable within the nozzle (116), the pin (126) slidable to open and close the mold gate (138) and controlling the flow of the melt of molten material to the mold gate (138);
a valve (146) located in the guide bore (132), said valve (146) having a movable valve member (304) for increasing and decreasing flow of melt flowing in the melt channel (246) of the nozzle (116) towards the mold gate (138), the valve member (304) receiving a pressure force from the melt; and
an actuator (148) providing a control force to the valve member (304), wherein the valve member (304) moves in response to a difference between the pressure force and the control force;
**characterized in that** the valve member (304) is a hollow control rod;
wherein the valve (146) further comprises a hollow support extension (302) positioned in the guide bore (132), and the hollow control rod is slidably disposed within the support extension (302);
wherein the support extension (302) comprises a melt opening (314) aligned with the outlet of the manifold melt channel (128) allowing the melt from the manifold melt channel (128) to reach the central melt channel (246);
wherein the hollow control rod comprises a full section (318), a narrowed section (320), and an enlarged valve portion (322), wherein the full section (318) has an outer diameter to slidably mate with the support extension (302), the narrowed section (320) is located between the full section (318) and the enlarged valve portion (322), and the narrowed section (320) has an outer diameter narrower than the outer diameters of the full section (318) and the enlarged valve portion (322); and wherein the inner diameters of the full section (318), the narrowed section (320), and the enlarged valve portion (322) are substantially the same and accommodate the pin (126) therein.

2. The injection molding apparatus (100) of claim 1, wherein when the control force exceeds the pressure force, the valve member (304) moves to enlarge a melt path and increase the pressure force; and when the pressure force exceeds the control force, the valve member (304) moves to constrict the melt path and decrease the pressure force.

3. The injection molding apparatus (100) of claim 1 or 2, wherein the pin (126) extends through the hollow control rod.

4. The injection molding apparatus (100) of one of claims 1 to 3, wherein the control force tends to push the hollow control rod in a direction of melt flow, which tends to enlarge a melt path between the hollow control rod and the support extension (302).

5. The injection molding apparatus (100) of one of claims 1 to 3, wherein the pressure force tends to push the hollow control rod in a direction opposite melt flow, which tends to constrict a melt path between the hollow control rod and the support extension (302).

6. The injection molding apparatus (100) of any one of claims 1 to 5, further comprising another actuator (117) for controlling the position of the pin (126).

7. The injection molding apparatus (100) of any one of claims 1 to 6, further comprising a nozzle tip (206) that aligns or guides the pin (126) over the sliding range of movement of the pin (126).

8. The injection molding apparatus (100) of any one of claims 1 to 7, wherein the valve (146) is located in the proximity of an outlet of the manifold melt channel (128).

9. The injection molding apparatus (100) of any one of claims 1 to 8, further comprising a controller (404), a pressure supply (408), and a proportional valve (414), wherein the controller (404) controls the proportional valve (414) to generate an actuator pressure from the pressure supply (408), wherein the actuator (148) converts the actuator pressure into the control force.

## Patentansprüche

1. Eine Spritzgießvorrichtung (100), umfassend:
einen Verteiler (112) mit einem Verteilerschmelzekanal (128) mit einem Auslass zum Führen und Zuführen eines geschmolzenen Materials, und mit einer Führungsbohrung (132);
eine Heißkanaldüse (116), die zwischen dem Verteiler (112) und einer Formangussöffnung (138) angeordnet ist, wobei die Düse (116) einen zentralen Schmelzekanal (246) aufweist, der mit dem Verteilerschmelzekanal (128) in Verbindung steht, um das geschmolzene Material aufzunehmen;
eine Nadel (126), die in der Düse (116) bewegbar ist, die Nadel (126) ist verschiebbar, um die Formangussöffnung (138) zu öffnen und zu schließen, sowie den Strom der Schmelze des geschmolzenen Materials an die Formangussöffnung (139) zu steuern;
ein Ventil (146), das in der Führungsbohrung (132) angeordnet ist, wobei das Ventil (146) ein bewegbares Ventilelement (304) zum Steigern oder Verringern des Stroms der Schmelze aufweist, die in dem Schmelzekanal (246) der Düse (116) in Richtung der Formangussöffnung (138) strömt, wobei das Ventilelement (304) eine Druckkraft aus der Schmelze aufnimmt; und
einen Aktuator (148), der eine Steuerkraft für das Ventilelement (304) bereitstellt, wobei das Ventilelement (304) sich in Reaktion auf eine Differenz zwischen der Druckkraft und der Steuerkraft bewegt;
**dadurch gekennzeichnet, dass** das Ventilelement (304) eine hohle Steuerstange ist;
wobei das Ventil (146) weiter eine hohle Stützverlängerung (302) umfasst, die in der Führungsbohrung (132) positioniert ist, und wobei die hohle Steuerstange verschiebbar in der Stützverlängerung (302) angeordnet ist;
wobei die Stützverlängerung (302) eine Schmelzeöffnung (314) umfasst, die mit dem Auslass des Verteilerschmelzekanals (128) ausgerichtet ist, sodass die Schmelze aus dem Verteilerschmelzekanal (128) den zentralen Schmelzekanal (246) erreichen kann;
wobei der hohle Steuerstab einen ausgefüllten Abschnitt (318), einen verengten Abschnitt (320) und einen vergrößerten Ventilabschnitt (322) umfasst, wobei der ausgefüllte Abschnitt (318) einen Außendurchmesser aufweist, um verschiebbar in die Stützverlängerung (302) zu passen, der verengte Abschnitt (320) ist zwischen dem ausgefüllten Abschnitt (318) und dem vergrößerten Ventilabschnitt (322) angeordnet, und der verengte Abschnitt (320) weist einen Außendurchmesser auf, der schmaler als der Außendurchmesser des ausgefüllten Abschnitts (318) und des vergrößerten Ventilabschnitts (322) ist; und wobei die Innendurchmesser des ausgefüllten Abschnitts (318), des verengten Abschnitts (320) und des vergrößerten Ventilabschnitts (322) im Wesentlichen gleich sind und darin die Nadel (126) aufnehmen.

2. Die Spritzgießvorrichtung (100) nach Anspruch 1, wobei das Ventilelement (304) sich so bewegt, um den Schmelzeweg zu vergrößern und die Druckkraft zu erhöhen, wenn die Steuerkraft die Druckkraft übersteigt; und das Ventilelement (304) sich so bewegt, um den Schmelzeweg zu verengen und die Druckkraft zu verkleinern, wenn die Druckkraft die Steuerkraft übersteigt.

3. Die Spritzgießvorrichtung (100) nach Anspruch 1 oder 2, wobei die Nadel (126) sich durch die hohle Steuerstange erstreckt.

4. Die Spritzgießvorrichtung (100) nach einem der Ansprüche 1 bis 3, wobei die Steuerkraft so gerichtet ist, um die hohle Steuerstange in eine Richtung des Schmelzestroms zu drücken, was darauf abzielt, einen Schmelzeweg zwischen der hohlen Steuerstange und der Stützverlängerung (302) zu vergrößern.

5. Die Spritzgießvorrichtung (100) nach einem der Ansprüche 1 bis 3, wobei die Druckkraft so gerichtet ist, um die hohle Steuerstange in eine Richtung entgegen des Schmelzestroms zu drücken, was darauf abzielt einen Schmelzeweg zwischen der hohlen Steuerstange und der Stützverlängerung (302) zu verengen.

6. Die Spritzgießvorrichtung (100) nach irgendeinem der Ansprüche 1 bis 5, weiter umfassend einen weiteren Aktuator (117) zum Steuern der Position der Nadel (126).

7. Die Spritzgießvorrichtung (100) nach irgendeinem der Ansprüche 1 bis 6, weiter umfassend eine Düsenspitze (206), die die Nadel (126) über den Gleitbereich der Bewegung der Nadel (126) ausrichtet oder führt.

8. Die Spritzgießvorrichtung (100) nach irgendeinem der Ansprüche 1 bis 7, wobei das Ventil (146) in der Nähe eines Auslasses des Verteilerschmelzekanals (128) angeordnet ist.

9. Die Spritzgießvorrichtung (100) nach einem der Ansprüche 1 bis 8, weiter umfassend eine Steuerung (404), eine Druckversorgung (408) und ein Proportionalventil (414), wobei die Steuerung (404) das Proportionalventil (414) ansteuert, um einen Betätigungsdruck aus der Druckversorgung (408) zu erzeugen, wobei der Aktuator (148) den Betätigungsdruck in die Steuerkraft umwandelt.

## Revendications

1. Appareil de moulage par injection (100) comprenant :
un collecteur (112) comportant un canal de coulée de collecteur (128) pourvu d'une sortie pour guider et délivrer une matière fondue, et un alésage de guidage (132) ;
une buse de canal chauffé (116) située entre le collecteur (112) et une entrée d'injection (138),
dans lequel la buse (116) comporte un canal de coulée central (246) communiquant avec le canal de coulée de collecteur (128) pour recevoir la matière fondue ;
une broche (126) mobile à l'intérieur de la buse (116), la broche (126) pouvant coulisser pour ouvrir et fermer l'entrée d'injection (138) et commander l'écoulement de la coulée de matière fondue vers l'entrée d'injection (138) ;
une soupape (146) située dans l'alésage de guidage (132), ladite soupape (146) comprenant un élément de soupape mobile (304) permettant d'augmenter et de diminuer le débit d'écoulement de la coulée dans le canal de coulée (246) de la buse (116) en direction de l'entrée d'injection (138), l'élément de soupape (304) recevant une force de pression provenant de la coulée ; et
un actionneur (148) fournissant une force de commande appliquée à l'élément de soupape (304), dans lequel l'élément de soupape (304) se déplace sous l'effet d'une différence entre la force de pression et la force de commande ;
**caractérisé en ce que** l'élément de soupape (304) est une tige de commande creuse ;
dans lequel la soupape (146) comprend, en outre, une extension de support creuse (302) positionnée dans l'alésage de guidage (132) et la tige de commande creuse est disposée de manière coulissante à l'intérieur de l'extension de support (302) ;
dans lequel l'extension de support (302) comporte une ouverture de coulée (314) alignée avec la sortie du canal de coulée de collecteur (128), ce qui permet à la coulée venant du canal de coulée de collecteur (128) d'atteindre le canal de coulée central (246) ;
dans lequel la tige de commande creuse comprend une section pleine (318), une section rétrécie (320) et une partie de soupape élargie (322), dans lequel la section pleine (318) a un diamètre extérieur prévu pour s'apparier de manière coulissante avec l'extension de support (302), la section rétrécie (320) est située entre la section pleine (318) et la partie de soupape élargie (322) et la section rétrécie (320) a un diamètre extérieur plus étroit que les diamètres extérieurs de la section pleine (318) et de la partie de soupape élargie (322) ; et dans lequel les diamètres intérieurs de la section pleine (318), de la section rétrécie (320) et de la partie de soupape élargie (322) sont sensiblement égaux et reçoivent la broche (126) logée à l'intérieur.

2. Appareil de moulage par injection (100) selon la revendication 1, dans lequel, lorsque la force de commande dépasse la force de pression, l'élément de soupape (304) se déplace pour élargir un chemin de coulée et augmenter la force de pression ; et lorsque la force de pression dépasse la force de commande, l'élément de soupape (304) se déplace pour réduire le chemin de coulée et diminuer la force de pression.

3. Appareil de moulage par injection (100) selon la revendication 1 ou 2, dans lequel la broche (126) s'étend à travers la tige de commande creuse.

4. Appareil de moulage par injection (100) selon l'une des revendications 1 à 3, dans lequel la force de commande a tendance à pousser la tige de commande creuse dans une direction d'écoulement de la coulée, ce qui tend à élargir un chemin de coulée entre la tige de commande creuse et l'extension de support (302).

5. Appareil de moulage par injection (100) selon l'une des revendications 1 à 3, dans lequel la force de pression a tendance à pousser la tige de commande creuse dans une direction opposée à l'écoulement de la coulée, ce qui tend à réduire un chemin de coulée entre la tige de commande creuse et l'extension de support (302).

6. Appareil de moulage par injection (100) selon l'une quelconque des revendications 1 à 5, comprenant, en outre, un autre actionneur (117) pour commander la position de la broche (126).

7. Appareil de moulage par injection (100) selon l'une quelconque des revendications 1 à 6, comprenant, en outre, une embouchure de buse (206) qui aligne ou guide la broche (126) sur l'étendue du mouvement coulissant de la broche (126).

8. Appareil de moulage par injection (100) selon l'une quelconque des revendications 1 à 7, dans lequel la soupape (146) est située à proximité d'une sortie du canal de coulée de collecteur (128).

9. Appareil de moulage par injection (100) selon l'une quelconque des revendications 1 à 8, comprenant, en outre, un dispositif de commande (404), une alimentation de pression (408) et une vanne proportionnelle (414), dans lequel le dispositif de commande (404) commande la vanne proportionnelle (414) pour générer une pression d'actionneur à partir de l'alimentation de pression (408), dans lequel l'actionneur (148) convertit la pression d'actionneur en la force de commande.
